# EUROPÄISCHE PATENTSCHRIFT

(11) **EP 0 435 873 B1**
(45) Veröffentlichungstag und Bekanntmachung des Hinweises auf die Patenterteilung: **22.03.1995**
(21) Anmeldenummer: 89908384.4
(22) Anmeldetag: 17.07.1989
(51) Int. Cl.: H04Q 11/04, H04M 3/26

(54) **VERFAHREN ZUM MESSEN IM TEILNEHMERBEREICH EINES INTEGRATED SERVICES DIGITAL NETWORK (ISDN)-SYSTEMS**
PROCESS FOR MEASURING IN THE USER DOMAIN OF AN INTEGRATED SERVICES DIGITAL NETWORK (ISDN) SYSTEM
PROCEDE DE MESURE DANS LE DOMAINE UTILISATEURS D'UN RESEAU NUMERIQUE A INTEGRATION DE SERVICES (ISDN)

(30) Priorität: 22.09.1988 DE 3832491
(43) Veröffentlichungstag der Anmeldung: 10.07.1991
(73) Patentinhaber: SIEMENS AKTIENGESELLSCHAFT, 80333 München (DE)
(72) Erfinder: Schuricht, Michael, W-1000 Berlin 28 (DE)
(86) Internationale Anmeldenummer: DE8900483
(87) Internationale Veröffentlichungsnummer: WO9003707

(56) Entgegenhaltungen:
- Siemens Telcom Report, Band 11, Nr. 2, März-April 1988, (Berlin, DE), A. Kamcke: "Leitungsdiagnose und Fehleranalyse für sicheren Protokollablauf", Seiten 61-64
- Electrical Communication, Band 61, Nr. 1, 7. März 1987, (Harlow, Essex, GB), W. KIRCHER et al.: "ISDN D Channel Protocol Simulator", Seiten 97-103
- Elektronik, Band 36, Nr. 24, 27. November 1987, (München, DE), H. SPRENGER: "ISDN und die Auswirkungen auf in-Circuit-Tests", Seiten 94-104

## Beschreibung

Ein ISDN-System läßt sich in einen sogenannten Teilnehmerbereich und den Bereich des ISDN-Betreibers unterteilen. Die Grenze dieser beiden Bereiche wird von einem Netzabschluß (Net Termination) gebildet. Von diesem Netzabschluß geht eine Datenbusleitung durch den oder die Räume des Teilnehmers. Der Netzabschluß bzw. der Datenbus verfügt über eine genormte Schnittstelle, die sogenannte Sₒ-Schnittstelle, an die verschiedenartige Endgeräte (Terminal Equipment) angeschlossen werden können. Bei dieser Sₒ-Schnittstelle handelt es sich um eine Vierdraht-Schnittstelle für bidirektionalen Datenaustausch zwischen dem Netzabschluß und einem bzw. mehreren Endgeräten des Teilnehmers. Als Übertragungscode wird ein sogenannter AMI-NRZ-Code verwendet. Dabei handelt es sich um einen quasiternären Code, in dem "0"-Bits mit + 0,75 V bzw. - 0,75 V und "1"-Bits als Null Volt dargestellt werden; aufeinanderfolgende "0"-Bit-Impulse haben grundsätzlich alternierende Polarität. Die zu übertragenden Daten sowie Synchronisations- und Steuerdaten werden zu 250 »s langen Übertragungsrahmen zusammengefaßt. Der Anfang eines derartigen Übertragungsrahmens wird durch eine Code-Verletzung gekennzeichnet. Die Code-Verletzung besteht darin, daß zwei aufeinanderfolgende "0"-Bit-Impulse dieselbe Polarität haben. Diese Verletzung wird von dem Endgerät sicher erkannt, so daß eine einfache und schnelle Synchronisation des Endgerätes mit dem Netzabschluß erfolgt. Bevor nun beispielsweise ein Endgerät Daten empfangen bzw. senden kann, ist mittels einer festgelegten Prozedur der Aufbau einer entsprechenden Verbindung notwendig. So müssen neben der bereits erwähnten Synchronisation der Übertragungsrahmen die Übertragungskanäle transparent gemacht werden, d. h. für die Übertragung von Daten vorbereitet werden. Diese auch als Aktivierung bezeichnete Prozedur besteht aus dem wechselseitigen Senden und Empfangen bestimmter, festgelegter Datenfolgen - im folgenden als Infos bezeichnet - zwischen dem Endgerät und dem Netzabschluß. Dazu verfügen diese Bestandteile über spezielle Kontrollbausteine, Sₒ-Bus-Controller (SBC) und ISDN-Communication-Controller (ICC). Die SBC-Bausteine steuern die Aktivierungs- bzw. auch die Deaktivierungsprozeduren. Diese Steuerung wird durch interne Zeitvorgaben von Zeitgliedern (Timer) überwacht; das bedeutet, daß die entsprechenden Infos stets nur für eine bestimmte Zeitdauer ausgegeben werden; innerhalb dieser Zeitdauer muß von dem korrespondierenden Bestandteil als Antwort auf eine empfangene Info eine bestimmte Info gesendet werden. Dabei ist die von dem korrespondierenden Bestandteil als Antwort zu sendende Info spezifisch für die zuvor von ihm empfangene Info, so daß jede Prozedur durch eine festgelegte Hierarchie von Infos charakterisiert ist. Soll der oben beispielsweise erwähnte Aufbau einer Verbindung (Aktivierung) von einem Endgerät ausgehen, so sendet dieses Endgerät zunächst eine erste, als Info 1 bezeichnete Datenfolge an den Netzabschluß. Dieser reagiert im Normalfall auf den Empfang der Datenfolge Info 1 mit dem Aussenden einer weiteren als Info 2 bezeichneten Datenfolge; diese Antwort muß innerhalb einer bestimmten Zeit erfolgen und das Senden der Info 2 erfolgt nur für eine begrenzte Zeit. Während dieser Zeit muß wiederum das Endgerät auf den Empfang der Info 2 durch Aussenden einer weiteren Datenfolge, Info 3, reagieren, deren Empfang wiederum von dem Netzabschluß durch Aussenden einer Datenfolge Info 4 quittiert wird. Entspricht die von dem korrespondierenden Bestandteil als Antwort gesendete Info nicht der nach der Hierarchie zu erwartenden Info (beispielsweise Senden von Info 4 als Antwort auf Info 1), trifft die erwartete Info nicht innerhalb einer vorgegebenen Zeit ein oder wird die Prozedur vom Teilnehmerendgerät nicht mit Info 1 begonnen, so wird die Prozedur abgebrochen und der Sₒ-Datenbus befindet sich wieder im Ausgangszustand, d. h. in einem inaktiven Zustand.

Dieses durch die SBC- bzw. ICC-Bausteine bedingte Verhalten erschwert Messungen (z. B. gemäß der Bundespost-Richtlinie 1 TR3, die Vorschriften zur Messung an der Sₒ-Schnittstelle enthält) an den Übertragungswegen und den Sₒ-Schnittstellen. Eine Info steht nur für eine begrenzte Zeit - nämlich für eine festgelegte, maximale Sendedauer bzw. bis zum Eintreffen der als Antwort erwarteten Info - zur Verfügung, so daß auch für die Messung der Reaktion des korrespondierenden Bestandteils nur eine begrenzte Zeit zur Verfügung steht. Ferner ist man bei Messungen an die hierarchische Reihenfolge der Infos gebunden, wie sie in einer bestimmten Prozedur auftreten. Außerdem stellen diese Bausteine nur ganz bestimmte, festgelegte Infos zur Verfügung, die bei den Prozeduren im Betrieb eines Systems verwendet werden.

Es ist bekannt, zum Messen der Reaktion eines Bestandteils des Teilnehmerbereichs eines ISDN-Systems das Teilnehmerendgerät und/oder den Netzabschluß vom Datenbus abzutrennen und an dem Datenbus einen Prüfmustergenerator und eine Meßeinrichtung anzuschließen ("telecom report" 11 (1988), Heft 2, Seiten 61 bis 64 und "Electrical Communication" 61 (1987), No. 1, Seiten 97 bis 103). Der Prüfmustergenerator übernimmt protokollmäßig die Funktion des abgetrennten Bestandteils, erzeugt also die zum Verbindungsaufbau im Bereich der Sₒ-Schnittstelle dienenden Datenfolgen. Die Meßeinrichtung ist mit dem Prüfmustergenerator in einem Gerät vereinigt oder getrennt davon angeordnet. Diese bekannte Simulation eines Bestandteils des Teilnehmerbereichs eines ISDN-Systems beseitigt nicht die oben angegebenen Probleme, wie begrenzte Zeit zur Reaktionsmessung und Gebundenheit an die hierarchische Reihenfolge der Infos.

Die Erfindung geht vom Verfahren zum Messen der Reaktion eines Bestandteils eines einen Netzanschluß mit einer genormten Sₒ -Schnittstelle, mindestens ein Teilnehmerendgerät mit einer genormten Sₒ-Schnittstelle und einen Datenbus zum wechselseitigen Austausch von Datenfolgen zwischen dem Netzabschluß und dem mindestens ein Teilnehmerendgerät aufweisenden Teilnehmerbereich eines Integrated Services Digital Network (ISDN)-Systems auf vorgegebene Datenfolgen aus, bei dem
- das Teilnehmerendgerät und/oder der Netzabschluß vom Datenbus abgetrennt wird und
- an den Datenbus ein Prüfmustergenerator zum Erzeugen der zum Verbindungsaufbau im Bereich der Sₒ -Schnittstelle dienenden Datenfolgen und eine Meßeinrichtung angeschlossen wird, und

stellt sich die Aufgabe, die meßtechnische Überprüfung der Schnittstellen des Teilnehmerbereichs zu verbessern.

Zur Lösung dieser Aufgabe werden erfindungsgemäß mit dem Prüfmustergenerator alle für schnittstelleneigene Prozeduren erforderlichen Datenfolgen in einer beliebig frei von prozeduralen Vorschriften vorgebbaren, meßtechnisch gewünschten Reihenfolge und Dauer erzeugt, indem aus einem mindestens die zum Verbindungsaufbau im Bereich der Sₒ -Schnittstelle dienenden Datenfolgen enthaltenden Speicherbaustein des Prüfmustergenerators den jeweils erforderlichen Datenfolgen entsprechende Bit-Folgen ausgelesen werden.

Damit können in vorteilhafter Weise die Schnittstellen der Teilnehmergeräte bzw. des Netzabschlusses sowie der Datenbus meßtechnisch überprüft werden, wobei hinsichtlich der Dauer und der Reihenfolge der zu Meßzwecken von dem Prüfmustergenerator ausgegebenen Datenfolgen (Infos) keine Beschränkung besteht. Es können also von dem zu untersuchenden Bestandteil Datenfolgen als Antwort abgefordert und mittels einer Meßeinrichtung, die z.B. gemäß der Bundespost-Richtlinie 1 TR3 aus einem Oszilloskop oder einem Frequenzzähler bestehen kann, angezeigt bzw. ausgewertet werden, wobei deren zeitliche Dauer nicht durch die prozeduralen Vorschriften beschränkt ist. Dies ist möglich durch das Dauersenden einer Datenfolge (info), d. h. das dauerhafte Aussenden einer Datenfolge, ohne daß dieses Aussenden durch die von dem zu untersuchenden Bestandteil als Antwort zurückgesendete Datenfolge (Info) beeinflußt bzw. abgebrochen wird. Außerdem kann der zu untersuchende Bestandteil mit einer beliebigen Sequenz von Datenfolge beaufschlagt werden, wobei die Sequenz der Datenfolgen nicht durch die Hierarchie der schnittstelleneigenen Prozedur vorgegeben ist.

Bei dem erfindungsgemäßen Verfahren enthält der Prüfmustergenerator einen Speicherbaustein, von dem auch mindestens eine frei definierbare Datenfolge ausgelesen wird. Damit besteht die vorteilhafte Möglichkeit, für Meßzwecke erforderliche, frei definierbare Datenfolgen zu senden; auf diese Weise lassen sich auch Messungen durchführen, bei denen die durch die schnittstelleneigenen Prozeduren festgelegten Datenfolgen (Infos) als Prüfmuster nicht einsetzbar bzw. nicht ausreichend sind.

Von dem Prüfmustergenerator werden synchron zu den Datenfolgen auf mindestens einem Datenausgabekanal Steuer- und/oder Identifizierungsdaten abgegeben. Damit ist vorteilhafterweise die Möglichkeit gegeben, bestimmte Informationseinheiten (Bits) einer Datenfolge (Info) zu kennzeichnen; dazu werden gleichzeitig mit den bestimmten Informationseinheiten (Bits) über den mindestens einen Datenausgabekanal Identifizierungsdaten, beispielsweise in Form von "1"-Bits, ausgegeben. In gleicher Weise kann damit auch ein ganzer Abschnitt einer Datenfolge (Info) gekennzeichnet werden. Ferner können Synchronisations- und Steuersignale beim Auftreten bestimmter Informationseinheiten (Bits) einer Datenfolge z. B. an die Meßeinrichtung abgegeben werden.

Bei dem Prüfmustergenerator zur Durchführung des erfindungsgemäßen Verfahrens ist ferner erfindungsgemäß vorgesehen, daß die Datenfolgen aus dem Speicherbaustein mittels einer Steuereinheit auswählbar sind, die eingangsseitig mit der Information über die auszuwählende Datenfolge beaufschlagbar ist und ausgangsseitig über ein Kippglied zum Sicherstellen des jeweils vollständigen Auslesens des jeweils ausgewählten Speicherbereichs mit Adreßeingängen des Speicherbausteins mit dem Freigabeeingang des Kippgliedes verbunden ist. Die Steuereinheit wird dabei eingangsseitig beispielsweise mit der digitalen Verschlüsselung der Nummer der gewünschten Datenfolge beaufschlagt. Durch diese Schaltungsanordnung ist es möglich, Datenfolgen in einer beliebigen Reihenfolge und Dauer auszuwählen. Dies ist dadurch ermöglicht, daß die Steuereinheit eingangsseitig mit einer beliebigen Folge von Informationen und beliebig lange mit der jeweils selben Information beaufschlagbar ist. Ist zu Meßzwecken mindestens eine frei definierbare Datenfolge erforderlich , so ist diese mindestens eine frei definierbare Datenfolge ebenfalls in dem Speicher abgelegt. Besonders geeignet ist ein Speicher, aus dem die ausgewählte Datenfolge sequentiell ausgelesen wird. Dazu wird mit der Steuereinheit eine Adreßvorwahl (Offset) vorgenommen, wobei die so definierte Adresse die das erste Datenbit einer gewünschten Datenfolge enthaltende Speicherzelle anspricht. Die folgenden Speicherzellen werden mit einem getakteten aufzählenden Zählerbaustein taktweise ausgelesen, bis die Adresse der das letzte Datenbit der Datenfolge enthaltenen Speicherzelle erreicht ist. Sofern die Datenfolge erneut ausgelesen werden soll, beispielsweise beim Dauersenden einer Datenfolge, erfolgt ein taktsynchrones Rücksetzen des Zählers, und der Auslesevorgang beginnt erneut bei der vorgewählten (Offset)-Adresse.

Eine Fortbildung des Prüfmustergenerators zur Durchführung des erfindungsgemäßen Verfahrens sieht vor, daß als Speicher ein löschbarer und wieder beschreibbarer Speicherbaustein vorgesehen ist. Damit besteht in vorteilhafter Weise die Möglichkeit, die zu Meßzwecken verwendeten Datenfolgen zu modifizieren und damit geänderten Meßaufgaben anzupassen. In diesen Baustein können z. B. durch ein entsprechendes Rechnerprogramm aufbereitete Datenfolgen relativ einfach eingeschrieben werden, wobei auch auf einen rechnerinternen RAM-Speicher zurückgegriffen werden kann; als Speicherbaustein eignet sich beispielsweise auch ein EPROM-Baustein.

Anhand der Zeichnung werden im folgenden der Aufbau und die Funktionsweise des erfindungsgemäßen Prüfmustergenerators näher erläutert. Es zeigen dabei
Fig. 1 einen Schaltplan eines Prüfmustergenerators zur Durchführung des erfindungsgemäßen Verfahrens und
Fig. 2 die beim Betrieb des Prüfmustergenerators nach Fig. 1 an signifikanten Punkten der Schaltung auftretenden Signalfolgen.

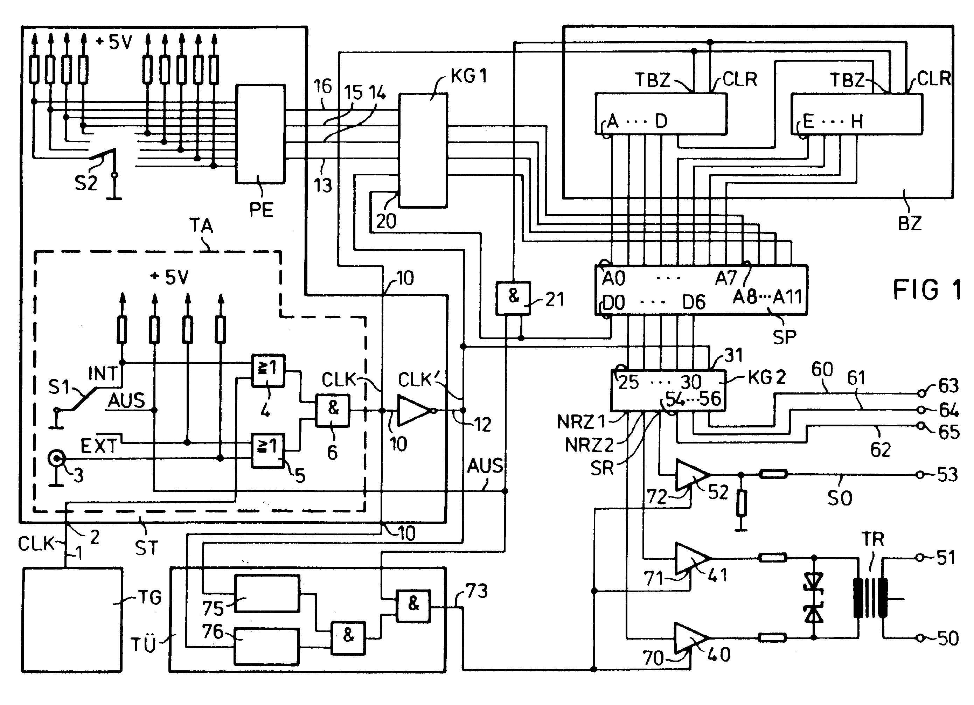

Nach Fig. 1 enthält ein Prüfmustergenerator einen Taktgeber TG, dessen Taktimpulse CLK über eine Leitung 1 einem Anschluß 2 einer Steuereinheit ST zugeführt werden. Die Steuereinheit ST enthält eine Taktauswahl TA, die einen weiteren Anschluß 3 aufweist, an den ein nicht dargestellter externer Taktgeber anschließbar ist. Der Anschluß 2 der Steuereinheit ST ist von einem Eingang eines logischen ODER-Gliedes 4 gebildet, und der Anschluß 3 der Steuereinheit ST ist von einem Anschluß eines weiteren logischen ODER-Gliedes 5 gbildet. Jeweils ein weiterer Eingang des logischen ODER-Gliedes 4 bzw. 5 ist jeweils mit einem einer Schalterstellung intern bzw. extern eines Schalters S1 zugeordneten Anschluß INT bzw. EXT verbunden. Der Schalter S1 weist eine dritte Schalterstellung auf, der der Anschluß AUS zugeordnet ist. Die Ausgänge der logischen ODER-Glieder 4 und 5 sind auf Eingänge eines UND-Gliedes 6 geführt, dessen Ausgang einen Taktausgang 10 der Steuereinheit ST bildet. An einem weiteren Ausgang 12 der Steuereinheit ST ist der invertierte Takt CLK′ abgreifbar. Die Steuereinheit ST enthält einen weiteren Schalter S2 und einen ihm nachgeordneten Prioritätsencoder PE, dessen Eingänge je nach Stellung des Schalters S2 mit 0 oder +5 V beaufschlagt sind, und dessen Ausgänge Ausgänge 13 bis 16 der Steuereinheit ST bilden. Die Ausgänge 13 bis 16 sind über ein erstes getaktetes Kippglied KG1 auf Adreßeingänge A8 bis A11 eines Speicherbausteins SP geführt. Ein Datenausgang D0 des Speicherbausteins SP ist auf einen Freigabeeingang 20 des Kippgliedes KG1 geführt. Adreßeingänge A0 bis A7 des Speicherbausteins SP sind mit Ausgängen A bis H eines 8-Bit-Binärzählers BZ verbunden. Dieser 8-Bit-Binärzähler ist aus zwei kaskadierten 4-Bit-Binärzählern aufgebaut, die jeweils über einen taktsynchronen Rücksetzeingang CLR verfügen. Der Binärzähler BZ wird an seinem Takteingang TBZ mit dem Takt CLK beaufschlagt. Die Rücksetzeingänge CLR sind über ein UND-Glied 21 mit dem Datenausgang D0 des Speicherbausteins SP und dem Anschluß AUS des Schalters S1 verbunden. Datenausgänge D1 bis D6 des Speicherbausteins SP sind auf Eingänge 25 bis 30 eines zweiten Kippgliedes KG2 geführt. Ein Takteingang 31 des Kippgliedes KG2 ist mit dem Ausgang 12 der Steuereinheit ST verbunden, und wird somit mit dem invertierten Taktsignal CLK′ beaufschlagt. Ausgänge NRZ1 und NRZ2 des Kippgliedes KG2 sind über zwei Treiberbausteine 40 und 41 auf Anschlüsse einer Primärwicklung eines Übertragers TR geführt. Die Sekundärwicklung des Übertragers TR weist zwei Anschlußpunkte 50 und 51 auf, die gleichzeitig Ausgangspunkte des Prüfmustergenerators darstellen, an die der zu untersuchende Datenbus mit zwei Eingängen angeschlossen wird. Ein weiterer Ausgang SR des Kippgliedes KG2 ist über einen weiteren Treiberbaustein 52 zu einem Schaltungspunkt 53 eines Datenausgabekanals S0 geführt. Auch dieser Schaltungspunkt 53 bildet einen Ausgangspunkt des Prüfmustergenerators. Drei weitere Ausgänge 54, 55 und 56 des Kippgliedes KG2 sind über Datenausgabekanäle 60, 61 und 62 zu weiteren ausgangsseitigen Anschlüssen 63, 64 und 65 des Prüfmustergenerators geführt. Die Treiberbausteine 40, 41 und 52 sind mit Freigabeeingängen 70, 71 und 72 versehen, die an einen Ausgang 73 einer Taktüberwachungsschaltung TÜ angeschlossen sind. Diese enthält zwei monostabile, nachtriggerbare Kippelemente 75 und 76, die eingangsseitig mit dem Taktimpuls CLK bzw. mit dem invertierten Taktimpuls CLK′ beaufschlagt sind.

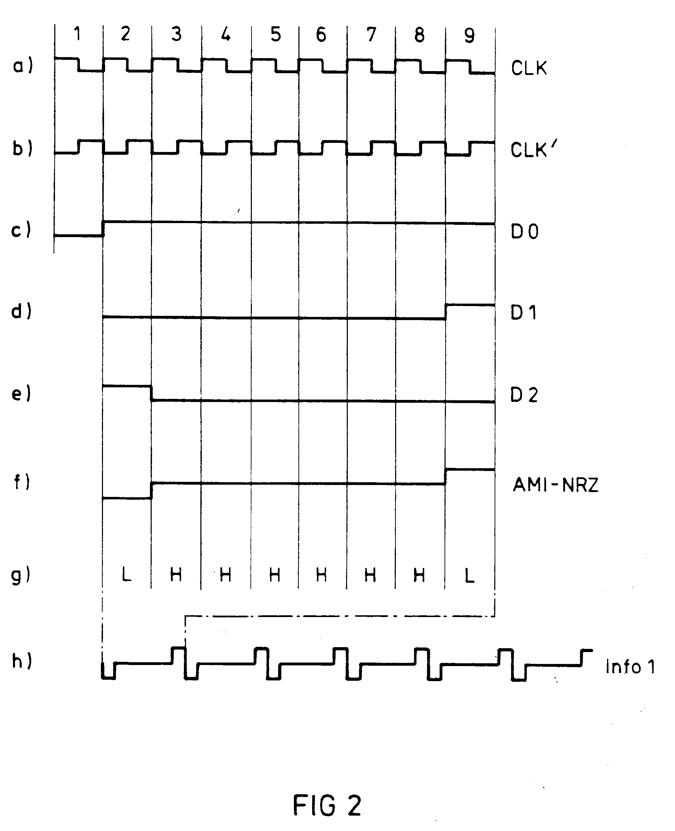

Die Funktionsweise des Prüfmustergenerators wird im Zusammenhang mit den in Fig. 2 dargestellten Signalen an signifikanten Punkten der Schaltung nach Fig. 1 näher erläutert. Dabei ist in der Zeile a der am Ausgang 10 der Steuereinheit ST anliegende Taktimpuls CLK und in der Zeile b der am Ausgang 12 der Steuereinheit ST abgreifbare invertierte Taktimpuls CLK′ dargestellt. Zeile c zeigt den zeitlichen Verlauf der auf dem Datenausgang D0 des Speicherbausteins SP ausgegebenen Signale, die Zeilen d und e den Verlauf der Signale an den Datenausgängen D1 bzw. D2 des Speicherbausteins SP bzw. der Ausgänge NRZ1 und NRZ2 des Kippgliedes KG2. In der Zeile f ist das nach dem Übertrager TR an den Anschlußpunkten 50 und 51 des Prüfmustergenerators abgreifbare Ausgangssignal dargestellt. In der Zeile g ist die in diesem Beispiel aus dem Speicherbaustein SP ausgelesene Bit-Folge in Form der einzelnen logischen Zustände aufgetragen, die aus 8 Bit besteht. Eine vollständige Datenfolge (z. B. Info 1) besteht aus 48 Bit, im Beispiel der Info 1 aus einer sechsmaligen Wiederholung der in der Zeile g dargestellten Bitfolge. Zum besseren Überblick ist die gesamte Datenfolge (Info 1) in der Zeile h in ihrem Verlauf dargestellt. Wird der Schalter S1 (Fig. 1) der Taktauswahl TA in die Position INT gestellt, wird der Prüfmustergenerator mit dem von dem Taktgeber TG erzeugten Takt CLK bzw. mit dem invertierten Takt CLK′ versorgt, die an den Ausgängen 10 bzw. 12 der Steuereinheit ST zur Verfügung stehen. Mit dem Schalter S2 wird die auszugebende Datenfolge (z. B. Info 1) ausgewählt; über den Prioritätsencoder PE und das Kippglied KG1 werden die Adreßeingänge A8 bis A11 des Speicherbausteins SP mit einem der ausgewählten Datenfolge (z. B. Info 1) entsprechenden Bitmuster beaufschlagt. Damit wird die erste auszulesende Speicherzelle definiert. In der Zeile c (Fig. 2) erkennt man mit Beendigung eines ersten Taktes 1 das Ende eines Rücksetzsignals für den 8-Bit-Binärzähler-Bausteins BZ, das von dem Datenausgang D0 des Speicherbausteins SP ausgegeben wird. Mit dem zweiten Takt wird die erste Speicherzelle des Speicherbausteins SP und damit das erste Bit der Datenfolge (Info 1) ausgelesen. Während des zweiten Taktes tritt am Datenausgang D2 (Zeile e, Fig. 2) ein positiver Impuls auf, wogegen am Datenausgang D1 kein Impuls erkennbar ist. Während der folgenden sechs Takte (3 bis 8) ist weder am Datenausgang D1 noch am Datenausgang D2 ein Impuls erkennbar. Während des neunten Taktes erscheint auf dem Datenausgang D1 ein positiver Impuls (Zeile d, Fig. 2). Die entsprechend der an den Eingängen 25 und 26 anliegenden Signale der Datenausgänge D1 und D2 an den Ausgängen NRZ1 bzw. NRZ2 des Kippgliedes KG2 auftretenden Signale werden über die Treiberbausteine 40 bzw. 41 dem Übertrager TR zugeführt; ausgangsseitig ist an den Anschlüssen 50 und 51 das im AMI-NRZ-modifizierten Code dargestellte Ausgangssignal abgreifbar. In dem gewählten Beispiel ist damit die in der Zeile f dargestellte Bit-Folge ausgelesen, die ihrerseits einen Teil einer auszulesenden Datenfolge (in diesem Beispiel Info 1) darstellt. Eine derartige Datenfolge besteht insgesamt aus 48 Bit, so daß im vorliegenden Beispiel in analoger Weise weitere 40 Bit aus dem Speicherbaustein SP auszulesen wären. Beim Erreichen des letzten auszulesenden Bits einer Datenfolge (Bit 48) erfolgt eine Impulsausgabe auf dem Datenausgang D0 (vgl. erster Takt, Zeile c, Fig. 2). Der Impuls dient zum taktsynchronen Rücksetzen des Binärzählers BZ und zur Übergabe des durch die Stellung des Schalters S2 eingangsseitig am Kippglied KG1 anliegenden Bitmusters auf die Adreßeingänge A8 bis A11 des Speicherbausteins SP. Ist das Dauersenden einer Datenfolge erwünscht, verbleibt der Schalter S2 der Steuereinheit ST in unveränderter Position; so beginnt das Auslesen desselben Speicherbereiches erneut. Ist in der Zwischenzeit die Stellung des Schalters S2 verändert worden, so wird die der neuen Schalterstellung entsprechende Bitstruktur mit dem Takt am Ausgang des Kippgliedes KG1 präsent und damit auf die Adreßvorwahleingänge A8 bis A11 des Speicherbausteins SP gegeben, in dem über den Datenausgang D0 des Speicherbausteins SP der bereits erwähnte Freigabeimpuls auf den Freigabeeingang 20 des Kippgliedes KG1 gegeben wird. Auf diese Weise ist sichergestellt, daß zu jeder Zeit mit dem Schalter S2 eine neue auszulesende Datenfolge (Info) bestimmt werden kann und die momentan ausgelesene Datenfolge unbeeinflußt bis zum Ende ausgelesen wird. Die am Datenausgang D3 des Speicherbausteins SP ausgegebenen Daten werden über das Kippglied KG2 (Ausgang SR) und den Treiberbaustein 52 auf den Anschlußpunkt 53 des Datenausgabekanals S0 geführt und dienen als Sₒ-Rahmenimpuls zur Identifikation einer bestimmten Stelle einer Datenfolge. Dieser Rahmenimpuls wird nämlich zu Beginn eines Übertragungsrahmens ausgegeben und ermöglicht, bei Messungen einen definierten Rahmenanfang zu erkennen. Aus dem Speicherbaustein SP können während jedes Taktes weitere Daten ausgelesen werden, die an den Datenausgängen D4, D5 und D6 abgreifbar sind und über das Kipglied KG2 den Datenausgabekanälen 60, 61 und 62 zugeführt werden. Mit diesen Daten können zusätzliche Funktionen, beispielsweise die Steuerung der Meßhardware, die Identifikation bestimmter Informationseinheiten (Bits) oder Abschnitte einer Datenfolge, erfüllt werden.

In gleicher Weise können aus dem Speicherbaustein SP frei definierte Datenfolgen ausgelesen werden. Dabei kann es sich auch um Datenfolgen handeln, die mit den schnittstelleneigenen prozeduralen Datenfolgen bis auf die den Rahmenanfang kennzeichnenden Codeverletzungen identisch sind. Mit dem Schalter S1 kann für bestimmte Meßzwecke auf eine externe Taktquelle umgeschaltet werden, die an den Anschluß 3 der Steuereinheit ST angeschlossen werden kann. Der Schalter S1 dient darüber hinaus zum Ausschalten des Prüfmustergenerators, wobei ein Rücksetzen des 8-Bit-Binärzählers BZ erfolgt. Bei einem Ausfall des Taktes (intern oder extern) wird eines der beiden monostabilen Elemente 75 oder 76 der Taktüberwachung TÜ nicht mehr getriggert und die Taktüberwachung TÜ beaufschlagt die Freigabeeingänge 70, 71 und 72 der Treiberbausteine 40, 41 und 52 mit einem derartigen Signal, daß die Treiberbausteine 40, 41 und 52 in den hochohmigen Zustand übergehen.

## Patentansprüche

1. Verfahren zum Messen der Reaktion eines Bestandteils eines einen Netzabschluß mit einer genormten Sₒ-Schnittstelle, mindestens ein Teilnehmerendgerät mit einer genormten Sₒ -Schnittstelle und einen Datenbus zum wechselseitigen Austausch von Datenfolgen zwischen dem Netzabschluß und dem mindestens ein Teilnehmerendgerät aufweisenden Teilnehmerbereichs eines Integrated Services Digital Network (ISDN)-Systems auf vorgegebene Datenfolgen, bei dem
- das Teilnehmerendgerät und/oder der Netzabschluß vom Datenbus abgetrennt wird und
- an den Datenbus ein Prüfmustergenerator zum Erzeugen der zum Verbindungsaufbau im Bereich der Sₒ-Schnittstelle dienenden Datenfolgen und eine Meßeinrichtung angeschlossen wird,
**dadurch gekennzeichnet,** daß
- mit dem Prüfmustergenerator alle für schnittstelleneigene Prozeduren erforderlichen Datenfolgen in einer beliebig frei von prozeduralen Vorschriften vorgebbaren, meßtechnisch gewünschten Reihenfolge und Dauer erzeugt werden, indem aus einem mindestens die zum Verbindungsaufbau im Bereich der Sₒ -Schnittstelle dienenden Datenfolgen enthaltenden Speicherbaustein des Prüfmustergenerators den jeweils erforderlichen Datenfolgen entsprechende Bit-Folgen ausgelesen werden.

2. Verfahren nach Anspruch 1,
**dadurch gekennzeichnet,** daß aus dem Speicherbaustein des Prüfmustergenerators mindestens eine frei definierbare Datenfolge ausgelesen wird.

3. Verfahren nach Anspruch 1 oder Anspruch 2,
**dadurch gekennzeichnet,** daß durch synchron zu den Datenfolgen auf mindestens einem Datenausgabekanal (S0,60,61,62) abgegebene Steuer- und/oder Identifizierungsdaten bestimmte Informationseinheiten der Datenfolgen gekennzeichnet werden.

4. Prüfmustergenerator zur Durchführung des Verfahrens nach einem der vorhergehenden Ansprüche,
**dadurch gekennzeichnet,** daß
die Datenfolgen aus dem Speicherbaustein (SP) mittels einer Steuereinheit (ST) auswählbar sind, die eingangsseitig mit der Information über die auszuwählende Datenfolge beaufschlagbar ist und ausgangsseitig über ein Kippglied (KG1) zum Sicherstellen des jeweils vollständigen Auslesens des jeweils ausgewählten Speicherbereichs mit Adreßeingängen (A8 bis A11) des Speicherbausteins (SP) mit dem Freigabeeingang (20) des Kippgliedes (KG1) verbunden ist.

5. Prüfmustergenerator nach Anspruch 4,
**dadurch gekennzeichnet,** daß
als Speicherbaustein (SP) ein löschbarer und wieder beschreibbarer Speicherbaustein vorgesehen ist.

## Claims

1. Method for measuring the reaction of a component of a subscriber domain of an Integrated Services Digital Network (ISDN) system, said subscriber domain comprising a net termination with a standardized Sₒ interface, at least one subscriber terminal device with a standardized Sₒ interface and a data bus for the mutual exchange of data rows between the net termination and the at least one subscriber terminal device, to predetermined data rows, in which
- the subscriber terminal device and/or the net termination is isolated from the data bus and
- there is connected to the data bus a test sample generator for generating the data rows used for setting up a call in the area of the Sₒ interface and a measuring instrument,
characterised in that
- with the test sample generator all the data rows required for interface-inherent procedures are generated in a predeterminable sequence and duration optionally free from rules of procedure and desirable in terms of measuring techniques, by reading out from a memory chip, namely of the test sample generator, which contains at least the data rows used for setting up a call in the area of the Sₒ interface, bit sequences corresponding to the particular data rows required.

2. Method according to claim 1, characterised in that there is read out from the memory chip of the test sample generator at least one freely definable data row.

3. Method according to claim 1 or claim 2, characterised in that particular information units of the data rows are marked by means of control and/or identification data supplied in sync with the data rows on at least one data output channel (SO, 60, 61, 62).

4. Test sample generator for carrying out the method according to any one of the preceding claims, characterised in that the data rows are selectable from the memory chip by means of a controller (ST) which is loadable on the input side with the information on the data row to be selected and is connected on the output side, via a trigger element (KG1) for ensuring the complete reading out in each case of the particular memory area selected with address inputs (A8 to A11) of the memory chip, to the enable input (20) of the trigger element (KG1).

5. Test sample generator according to claim 4, characterised in that there is provided as memory chip (SP) an erasable and reprogrammable memory chip.

## Revendications

1. Procédé pour mesurer la réaction, à des suites prédéterminées de données, d'un composant d'une unité d'abonné, comportant une terminaison de réseau possédant une interface Sₒ normalisée, au moins un terminal d'abonné possédant une interface Sₒ normalisée et un bus de transmission de donnée pour l'échange réciproque de suites de données entre la terminaison du réseau et le ou les terminaux d'abonnés, d'un système Integrated Services Digital Network (ISDN) selon lequel
- on déconnecte le terminal d'abonné et/ou la terminaison de réseau, du bus de transmission de données, et
- on raccorde au bus de transmission de données un générateur de profil de contrôle servant à produire des suites de données utilisées pour l'établissement d'une liaison au niveau de l'interface Sₒ, et un dispositif de mesure,
caractérisé par le fait que
- à l'aide du générateur de profil de contrôle, toutes les suites de données, qui sont nécessaires pour des procédures propres à l'interface, sont produites selon une séquence et une durée qui peuvent être prédéterminées d'une manière quelconque en dehors de prescription de procédure et sont désirées du point de vue de la technique de mesure, par le fait que des suites de bits, qui correspondent aux suites respectives nécessaires de données, sont lues à partir d'un module de mémoire qui contient les suites de données utilisées pour l'établissement de la liaison au niveau de l'interface Sₒ, du générateur de profil de contrôle.

2. Procédé suivant la revendication 1, caractérisé par le fait qu'au moins une suite de données, pouvant être définie librement, est lue à partir du module de mémoire du générateur de profil de contrôle.

3. Procédé suivant la revendication 1 ou la revendication 2, caractérisé par le fait que des unités déterminées d'informations des suites de données sont caractérisées par des données de commande et/ou des données d'identification, qui sont délivrées en synchronisme avec les suites de données, à au moins un canal (S0,60,61,62) de délivrance de données.

4. Générateur de profil de contrôle pour la mise en oeuvre du procédé suivant l'une des revendications précédentes, caractérisé par le fait que les suites de données peuvent être sélectionnées à partir du module de mémoire (SP) au moyen de l'unité de commande (ST) qui peut être chargée, côté entrée, par l'information concernant la suite de données devant être sélectionnée et est reliée, côté sortie, par l'intermédiaire d'un circuit à bascule (KG), pour assurer la lecture respective complète de la zone de mémoire respectivement sélectionnée, avec des entrées d'adresses (A8 à A11) du module de mémoire (SP), à l'entrée d'autorisation (20) du circuit à bascule (KG).

5. Générateur de profil de contrôle suivant la revendication 4, caractérisé par le fait qu'un module de mémoire effaçable et réenregistrable est prévu en tant que module de mémoire (SP).
